# EUROPEAN PATENT APPLICATION

(11) **EP 4 223 587 A1**
(43) Date of publication of application: **09.08.2023**
(21) Application number: 23152326.7
(22) Date of filing: 19.01.2023
(51) Int. Cl.: B60P 1/02

(54) **REAR AXLE MOVEMENT DEVICE FOR TRUCK WITH LOWERABLE BED**

(30) Priority: 24.01.2022 TW 111103229
(71) Applicant: Valsch Dynamic Mechatronics Ltd., Taoyuan City 33743 (TW)
(72) Inventor: Yang, An-Tao Anthony, Taoyuan City (TW)
(74) Representative: Sach, Greg Robert

(57) **Abstract**

Provided is a rear movement device for a truck with lowerable bed, comprising: a front axle, a driver's cab, a rear axle, a cargo container, a sub-frame, a first lifting device, a second lifting device, a first guiding device, a first sub-frame driving element and a second sub-frame driving element.

## Description

### Field of Invention

The present invention provides a rear axle movement device for truck with lowerable bed, in particular a truck having a driver's cab and a cargo container as two independent compartments utilizes sub-frame driving element to control the movement of the rear axle.

### Background

Currently used truck with lowerable bed has a driver's cab, a cargo container, a front axle, a rear axle, two lifting devices and two guiding devices, in which the front axle connects to the driver's cab; the driver's cab connects to the second lifting device and the second guiding device; the second lifting device connects to the cargo container; the cargo container connects to the first lifting device and the first guiding device; and the first guiding device connects to the rear axle. In driving mode, the front axle is under the driver's cab and the rear axle is under the cargo container. In loading mode, the front axle is under the driver's cab and the rear axle is under the driver's cab.

The rear axle movement of the truck with lowerable bed as mentioned above utilizes an electric motor to drive a gear to move the gear (i) on the second half of the first gear rack connecting to the first guiding device, or (ii) on the first half of the first gear rack connecting to the second guiding device, causing the rear axle can be moved between the first guiding device and the second guiding device. However, due to the accuracy of control for height, the first half of the first gear rack and the second half of the first gear rack have an offset, causing the change of assemble distance for the gear and the gear rack.

### Problem to be solved

The primary objective of the present invention is to provide a rear axle movement device for truck with lowerable bed, in which the rear axle movement device utilizes at least one sub-frame driving element to move the rear axle between the position below the driver's cab and the position below the cargo container.

### Summary of Invention

Provided in the first embodiment is a rear axle movement for truck with lowerable bed comprising: a front axle, a driver's cab, a rear axle, a cargo container, a sub-frame, a first lifting device, a second lifting device, a first guiding device, a first sub-frame driving element, a second sub-frame driving element, an electric motor, and a clutch.

Provided in the second embodiment is a rear axle movement for truck with lowerable bed comprising: a front axle, a driver's cab, a rear axle, a cargo container, a sub-frame, a first lifting device, a second lifting device, a first guiding device, a first sub-frame driving element, a second sub-frame driving element, a first fixed end of the first chain, a first chain, a first idler, a second idler, an electric motor, and a clutch.

Provided in the third embodiment is a rear axle movement for truck with lowerable bed comprising: a front axle, a driver's cab, a rear axle, a cargo container, a sub-frame, a first lifting device, a second lifting device, a first guiding device, a first fixed end of the first chain, a first chain, a first idler, a second idler, a third idler, a fourth idler, an electric motor, and a clutch.

### Advantage of Invention

According to the present invention, a rear axle movement device is enabled with the use of sub-frame driving element to move the rear axle between the position below the driver's cab and the position below the cargo container.

### Description of Drawings

FIG.1 is a side view of a truck with lowerable bed in driving mode
FIG.2 is a side view of a truck with lowerable bed during mode change.
FIG.3 is a side view of a truck with lowerable bed in a loading mode.
FIG.4 to FIG.6 are schematic views of the first embodiment.
FIG.7 to FIG.12 are schematic views of the second embodiment.
FIG.13 to FIG.18 are schematic views of the third embodiment.

### Description

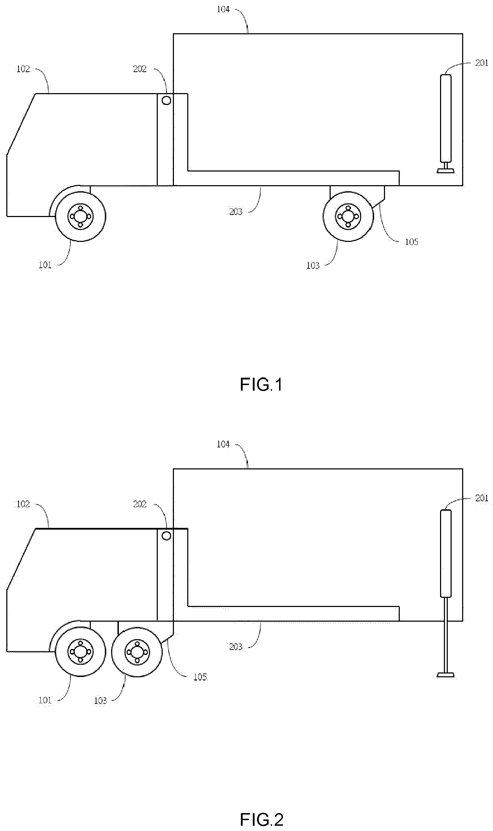

Referring to FIG.1, a truck with lowerable bed to the first embodiment to the fifth embodiment of the present invention includes: a front axle 101, a driver's cab 102, a rear axle 103, a cargo container 104, a sub-frame 105, a first lifting device 201, a second lifting device 202, and a first guiding device 203.

Referring to FIG.1, the front axle 101 connects to the driver's cab 102; the driver's cab 102 connects to the second lifting device 202; the second lifting device 202 connects to the cargo container 104; the cargo container 104 connects to the first lifting device 201 and the first guiding device 203; the first guiding device 203 connects to the sub-frame 105; and the sub-frame 105 connects to the rear axle 103.

Referring to FIG.1, the front axle 101 is below the driver's cab 102; the rear axle 103 is below the cargo container 104; and the driver's cab 102 is before the cargo container 104.

Referring to FIG.1 and FIG.2, when the truck is changed from driving mode to transition mode, the first lifting device 201 extend to maintain the rear height of the cargo container 104; the sub-frame 105 is moved forward on the horizontal part of the first guiding device 203; and the rear axle 103 is moved from the position below the cargo container 104 to the position below the driver's cab 102.

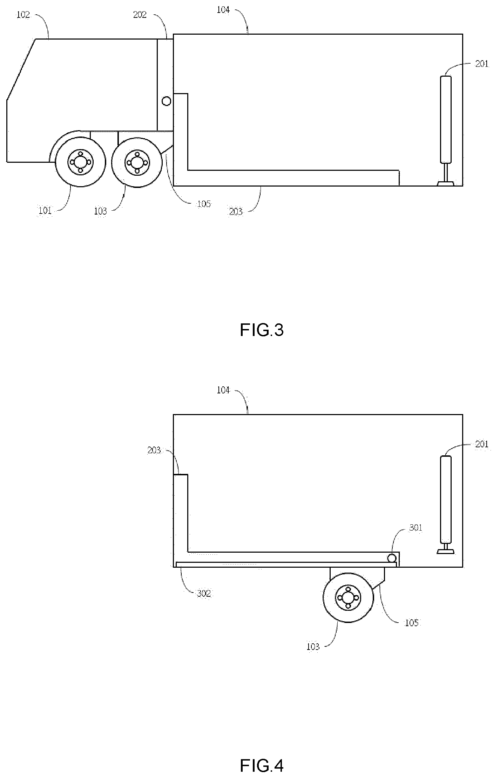

Referring to FIG.2 and FIG.3, when the truck is changed from transition mode to loading mode, the first lifting device 201 controls the rear height of the cargo container 104 and the second lifting device 202 controls the front height of the cargo container 104 to allow the cargo container 104 to be moved downward from the first height to the second height; and the sub-frame 105 is moved upward on the vertical part of the first guiding device 203.

Referring to FIG.3 and FIG.2, when the truck is changed from the loading mode to transition mode, the first lifting device 201 controls the rear height of the cargo container 104 and the second lifting device 202 controls the front height of the cargo container 104 to allow the cargo container 104 to be moved upward from the second height to the first height; and the sub-frame 105 is move downward on the vertical part of the first guiding device 203.

Referring to FIG.2 and FIG.1, when the truck is changed from transition mode to driving mode, the sub-frame 105 is moved backward on the horizontal part of the first guiding device 203; the rear axle 103 is moved from the position below the driver's cab 102 to the position below the cargo container 104; and the first lifting device 201 contract.

Referring to FIG.4, the rear axle movement to the first embodiment of the present invention includes an electric motor, a clutch, a first sub-frame driving element, and a second sub-frame driving element.

Referring to FIG.4, the horizontal part of the first guiding device 203 connects to the second sub-frame driving element 302; the second sub-frame driving element 302 connects to the first sub-frame driving element 301; the first sub-frame driving element 301 connects to the sub-frame 105 and the clutch; and the clutch connects to the electric motor. Wherein, the first sub-frame driving element 301 can be a gear; the second sub-frame driving element 302 can be a gear rack; and the first sub-frame driving element 301 is meshing to the second sub-frame driving element 302.

Referring to FIG.4, the first sub-frame driving element 301 is on the horizontal part of the first guiding device 203.

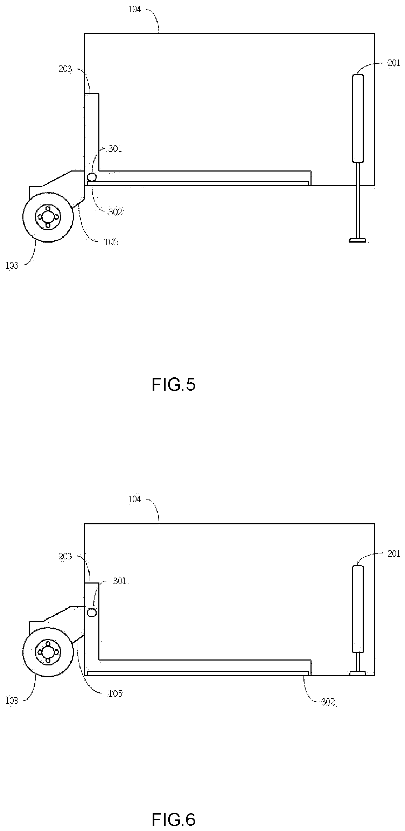

Referring to FIG.4 and FIG.5, when the truck is changed from driving mode to transition mode, the clutch is connecting; the electric motor drives the first sub-frame driving element 301 to move with respect to the second sub-frame driving element 302; and the first sub-frame driving element 301 is move forward on the horizontal part of the first guiding device 203.

Referring to FIG.5 and FIG.6, when the truck is changed from transition mode to loading mode, the clutch is disconnecting; the cargo container 104 is moved downward from the first height to the second height; the first sub-frame driving element 301 disconnects to the second sub-frame driving element302; and the first sub-frame driving element 301 is moved upward on the vertical part of the first guiding device 203.

Referring to FIG.6, the first sub-frame driving element 301 is on the vertical part of the first guiding device 203.

Referring to FIG.6 and FIG.5, when the truck is changed from loading mode to transition mode, the cargo container 104 is moved upward from the second height to the first height; the first sub-frame driving element 301 is moved downward on the vertical part of the first guiding 203; and the first sub-frame driving element 301 connects to the second sub-frame driving element 302.

Referring to FIG.5 and FIG.4, when the truck is changed from transition mode to driving mode, the clutch is connecting; the electric motor drives the first sub-frame driving element 301 to move with respect to the second sub-frame driving element 302; and the first sub-frame driving element 301 is moved backward on the horizontal part of the first guiding device 203.

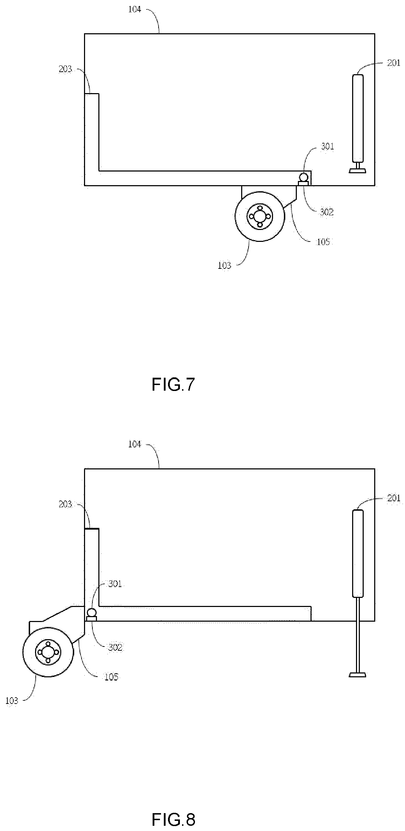

Referring to FIG.7, the rear axle movement to the second embodiment of the present invention includes a first sub-frame driving element 301 and a second sub-frame driving element 302.

Referring to FIG.7, the second sub-frame driving element 302 connects to the horizontal part of the first guiding device 203; the second sub-frame driving element 302 connects to the first sub-frame driving element 301; and the first sub-frame driving element 301 connects to the sub-frame 105.

Referring to FIG.7, the first sub-frame driving element 301 is on the horizontal part of the first guiding device 203.

Referring to FIG.7 and FIG.8, when the truck is changed from driving mode to transition mode, the second sub-frame driving element 302 is moved forward on the horizontal part of the first guiding device 203; and the first sub-frame driving element 301 is moved forward on the horizontal part of the first guiding device 203.

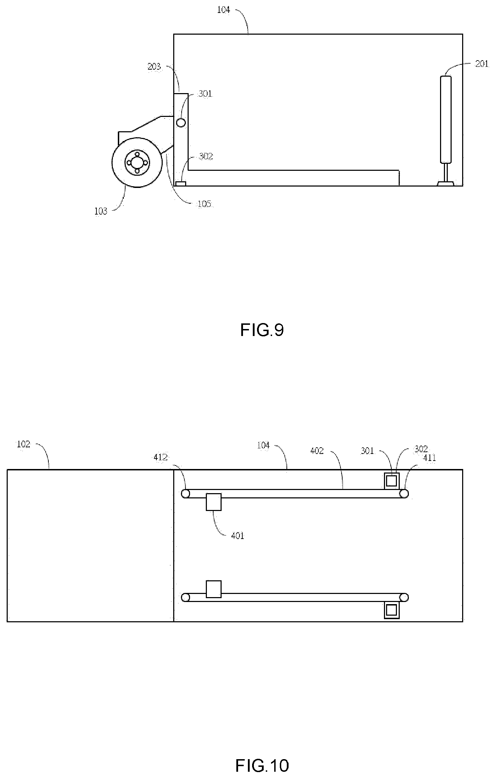

Referring to FIG.8 and FIG.9, when the truck is changed from transition mode to loading mode, the cargo container 104 is moved downward from the first height to the second height; the first sub-frame driving element 301 disconnects to the second sub-frame driving element 302; and the first sub-frame driving element 301 is moved upward on the vertical part of the first guiding device 203.

Referring to FIG.9, the first sub-frame driving element 301 is on the vertical part of the first guiding device 203.

Referring to FIG.9 and FIG.8, when the truck is changed from loading mode to transition mode, the cargo container 104 is moved from the second height to the first height; the first sub-frame driving element 301 is moved downward on the vertical part of the first guiding device 203; and the first sub-frame driving element 301 connects to the second sub-frame driving element 302.

Referring to FIG.8 and FIG.7, when the truck is changed from transition mode to driving mode, the second sub-frame driving element 302 is moved backward on the horizontal part of the first guiding device 203; the first sub-frame driving element 301 is moved backward on the horizontal part of the first guiding device 203.

Referring to FIG.10, the rear axle movement to the second embodiment of the present invention further includes a fixed end of the first chain 401, a first chain 402, a first idler 403, and a second idler 404; wherein, the second sub-frame driving element 302 connects to the first chain 402; the first chain 402 connects to the first fixed end of the first chain 401 through the first idler 403 and the second idler 404.

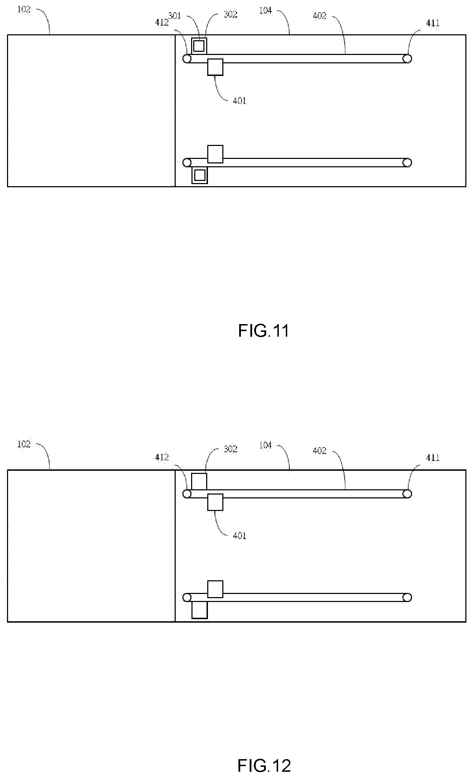

Referring to FIG.10 and FIG.11, when the truck is changed from driving mode to transition mode, the first fixed end of the first chain 401 is driven; the second sub-frame driving element 302 is moved forward on the horizontal part of the first guiding device 203; and the first sub-frame driving element 301 is moved forward on the horizontal part of the first guiding device 203.

Referring to FIG.11 and FIG.12, when the truck is changed from transition mode to loading mode, the cargo container 104 is moved downward from the first height to second height; the first sub-frame driving element 301 disconnects to the second sub-frame driving element 302; and the first sub-frame driving element 301 is moved upward on the vertical part of the first guiding device 203.

Referring to FIG.12 and FIG.11, when the truck is changed from loading mode to transition mode, the cargo container 104 is moved upward from the second height to the first height; the first sub-frame driving element 301 is moved downward on the vertical part of the first guiding device 203; and the first sub-frame driving element 301 connects to the second sub-frame driving element 302.

Referring to FIG.11 and FIG.10, when the truck is changed from transition mode to driving mode, the first fixed end of the first chain 401 is driven; the second sub-frame driving element 302 is moved backward on the horizontal part of the first guiding device 203; and the first sub-frame driving element 301 is moved backward on the horizontal part of the first guiding device 203.

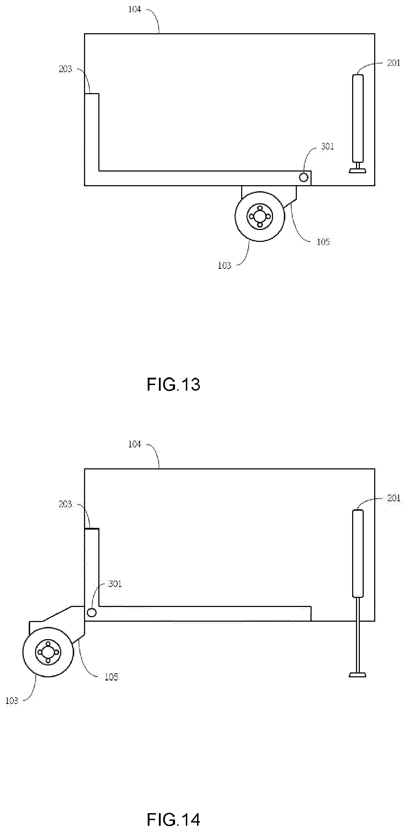

Referring to FIG.13, the rear axle movement to the third embodiment of the present invention includes a first sub-frame driving element 301.

Referring to FIG.13, the horizontal; part of the first guiding device 203 connects to the first sub-frame driving element 301; and the first sub-frame driving element 301 connects to the sub-frame 105.

Referring to FIG.13, the first sub-frame driving element 301 is on the horizontal part of the first guiding device 203.

Referring to FIG.13 and FIG.14, when the truck is changed from driving mode to transition mode, the first sub-frame driving element 301 is moved forward on the horizontal part of the first guiding device 203.

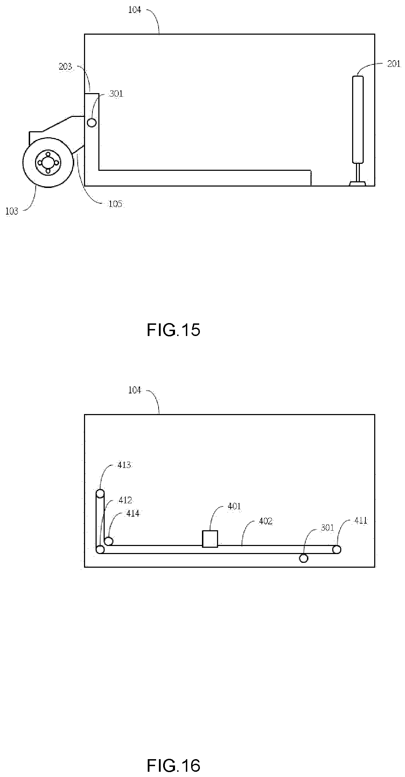

Referring to FIG.14 and FIG.15, when the truck is changed from transition mode to loading mode, the cargo container 104 is moved downward from the first height to the second height; and the first sub-frame driving element 301 is moved upward on the vertical part of the first guiding device 203.

Referring to FIG.15, the first sub-frame driving element 301 is on the vertical part of the first guiding device 203.

Referring to FIG.15 and FIG.14, when the truck is changed from loading mode to transition mode, the cargo container 104 is moved upward from the second height to the first height; and the first sub-frame driving element 301 is moved downward on the vertical part of the first guiding device 203.

Referring to FIG.14 and FIG.13, when the truck is changed from transition mode to driving mode, the first sub-frame driving element 301 is moved backward on the horizontal part of the first guiding device 203.

Referring to FIG.16, the rear axle movement to the third embodiment of the present invention further includes a fixed end of the first chain 401, a first chain 402, a first idler 411, a second idler 412, a third idler 413 and a fourth idler 414. Wherein, the first sub-frame driving element 301 connects to the first chain 402; the first chain 402 connects to the first fixed end of the first chain 401 through the first idler 411, the second idler 412, the third idler 413 and the fourth idler 414.

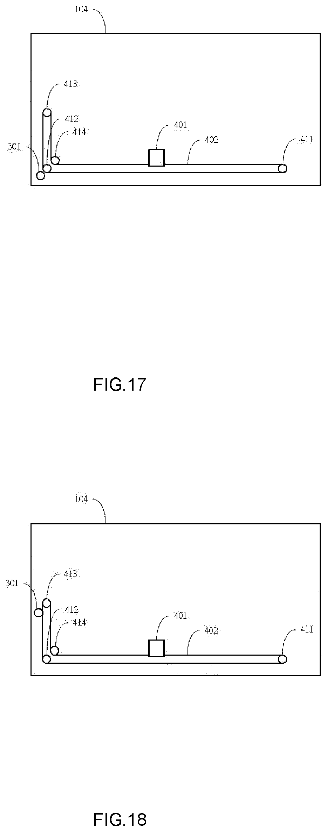

Referring to FIG.16 and FIG.17, when the truck is changed from driving mode to transition mode, the first fixed end of the first chain 401 is driven; the first sub-frame driving element 301 is moved forward on the horizontal part of the first guiding device 203.

Referring to FIG.17 and FIG.18, when the truck is changed from transition mode to loading mode, the cargo container 104 is moved downward from the first height to the second height; the first sub-frame driving element 301 is moved upward on the vertical part of the first guiding device 203; the first fixed end of the first chain 401 winds the first chain 402 through the third idler 413 and the fourth idler 414; and the first fixed end of the first chain 401 unwinds the first chain 402 through the first idler 411 and the second idler 412.

Referring to FIG.18 and FIG.17, when the truck is changed from loading mode to transition mode, the cargo container 104 is moved upward from the second height to the first height; the first sub-frame driving element 301 is moved downward on the vertical part of the first guiding device 203; the first fixed end of the first chain 401 unwinds the first chain 402 through the third idler 413 and the fourth idler 414; and the first fixed end of the first chain 401 winds the first chain 402 through the first idler 411 and the second idler 412.

Referring to FIG.17 and FIG.16, when the truck is changed from transition mode to driving mode, the first fixed end of the first chain 401 is driven; and the first sub-frame driving element 301 is moved backward on the horizontal part of the first guiding device 203.

The rear axle 103 to the first embodiment to the third embodiment can be independent axle or dependent axle.

The cargo container 104 to the first embodiment to the third embodiment can be hard-top container or platform.

Suspension part such as spring or shock absorber to the first embodiment to the third embodiment can be placed between the sub-frame 105 and the rear axle 103.

Transmission part such as transmission axle or differential to the first embodiment to the third embodiment can be placed between the sub-frame 105 and the rear axle 103.

The horizontal part of the first guiding device 203 to the first embodiment to the third embodiment allows the sub-frame 105 to move longitudinally with respect to the cargo container 104.

The vertical part of the first guiding device 203 to the first embodiment to the third embodiment allows the sub-frame 105 to move vertically with respect to the cargo container 104.

The horizontal part of the first guiding device 203 to the first embodiment to the third embodiment can limit the distance between the first sub-frame driving element 301 and the second sub-frame driving element 302.

The second height to the first embodiment to the third embodiment can be ground.

The electric motor to the first embodiment can drive rear axle.

The electric motor to the first embodiment can connects to the first sub-frame driving element 301.

The first fixed end of the first chain 401 and the first chain 402 to the second embodiment to the third embodiment can be an transmission assembly of a first fixed of the first cable and a first cable, or a first fixed of the first belt and a belt.

The first fixed end of the first chain 401 to the second embodiment to the third embodiment can be a linear actuator.

The first sub-frame driving element 301 to the second embodiment to the third embodiment can further includes a connecting device, which can connects or disconnects to the first sub-frame driving element 301 and the second sub-frame driving element 302.

The second sub-frame driving element 302 to the second embodiment to the third embodiment can further includes a connecting device, which can connects or disconnects to the first sub-frame driving element 301 and the second sub-frame driving element 302.

The second fixed end of the first chain to the second embodiment can be further included, and the first chain 402 can connects to the first fixed end of the first chain 401 and the second fixed end of the first chain.

The second sub-frame driving element 302 to the third embodiment can connect to the first sub-frame driving element 301 and the first guiding device 203.

The second fixed end of the first chain to the third embodiment can be further included, and the first chain 402 can connects to the first fixed end of the first chain 401 and the second fixed end of the first chain.

## Claims

1. A rear axle movement device for a truck with a lowerable bed, wherein the truck with the lowerable bed includes:
a front axle, a driver's cab, a rear axle, a cargo container, a sub-frame, a first lifting device, a second lifting device, and a first guiding device;
wherein said first guiding device includes a horizontal part of said first guiding device and a vertical part of said first guiding device;
wherein said front axle connects to said driver's cab;
wherein said driver's cab connects said second lifting device;
wherein said second lifting device connects to said cargo container;
wherein said cargo container connects to said first lifting device and said first guiding device;
wherein, in a driving mode, said front axle is below said driver's cab and said rear axle is below said cargo container;
wherein, in a loading mode, said front axle is below said driver's cab and said rear axle is below said driver's cab;
wherein said rear axle movement device comprising: a first sub-frame driving element;
wherein said first guiding device connects to said first sub-frame driving element;
wherein said first sub-frame driving element connects to said sub-frame;
wherein said first sub-frame driving element is in said horizontal part of said first guiding device in the driving mode;
wherein said first sub-frame driving element is in said vertical part of said first guiding device in the loading mode.

2. The rear axle movement device as claimed in claim 1, further including:
a first chain and a first fixed end of the first chain;
wherein said first fixed end of the first chain connects to said first chain;
wherein said first chain connects to said first sub-frame driving element.

3. The rear axle movement device as claimed in claim 1, further including:
a first cable and a first fixed end of the first cable;
wherein said first fixed end of the first cable connects to said first cable;
wherein said first cable connects to said first sub-frame driving element.

4. The rear axle movement device as claimed in claim 1, further including:
a first belt and a first fixed end of the first belt;
wherein said first fixed end of the first belt connects to said first belt;
wherein said first belt connects to said first sub-frame driving element.

5. The rear axle movement device as claimed in claim 1, further including:
a second sub-frame driving element;
wherein said second sub-frame driving element connects to said first guiding device and
said first sub-frame driving element.

6. The rear axle movement device as claimed in claim 1 or 5, further including:
an electric motor;
wherein said electric motor connects to said first sub-frame driving element.

7. The rear axle movement device as claimed in claim 6, further including:
a clutch;
wherein said clutch connects to said electric motor and said first sub-frame driving element.

8. The rear axle movement device as claimed in claim 5, further including:
a first chain and a first fixed end of the first chain;
wherein said first fixed end of the first chain connects to said first chain;
wherein said first chain connects to said second sub-frame driving element.

9. The rear axle movement device as claimed in claim 5, further including:
a first cable and a first fixed end of the first cable;
wherein said first fixed end of the first cable connects to said first cable;
wherein said first cable connects to said second sub-frame driving element.

10. The rear axle movement device as claimed in claim 5, further including:
a first belt and a first fixed end of the first belt;
wherein said first fixed end of the first belt connects to said first belt;
wherein said first belt connects to said second sub-frame driving element.

11. The rear axle movement device as claimed in claim 2 or 8, further comprising:
a second fixed end of the first chain;
wherein said first chain connects to said second fixed end of the first chain.
